# EUROPEAN PATENT APPLICATION

(11) **EP 4 822 335 A1**
(43) Date of publication of application: **14.10.2026**
(21) Application number: 24930337.1
(22) Date of filing: 16.08.2024
(51) Int. Cl.: G01N 21/01, G01N 21/95, H01M 10/04, H01M 6/00

(54) **BATTERY BLUE-FILM COATING SYSTEM AND BATTERY BLUE-FILM COATING DETECTION METHOD**

(30) Priority: 21.03.2024 CN 202410326494
(71) Applicant: Contemporary Amperex Technology Co., Limited, Ningde, Fujian 352100 (CN)
(72) Inventor: CHE, Xingchi, Ningde, Fujian 352100 (CN); MENG, Pengfei, Ningde, Fujian 352100 (CN); FENG, Jinzhou, Ningde, Fujian 352100 (CN); LI, Tong, Ningde, Fujian 352100 (CN); MA, Lin, Ningde, Fujian 352100 (CN)
(74) Representative: Ziebig Hengelhaupt Intellectual Property Attorneys Patentanwaltskanzlei PartGmbB
(86) International application number: PCT/CN2024/112816
(87) International publication number: WO 2025/194675

(57) **Abstract**

The present application belongs to the technical field of batteries. Provided are a battery blue-film coating system and a battery blue-film coating detection method. The system comprises: a battery cell, which comprises a battery cell body and a blue film, wherein the battery cell body comprises a top surface and a bottom support face; a mechanical gripper, which comprises a first gripper and a second gripper, the two grippers being respectively configured to clamp onto two opposite side faces of the battery cell body; a blue strip-shaped light source, which is arranged at a preset angle with the bottom support face, wherein a light source face of the blue strip-shaped light source faces the bottom support face; an image acquisition unit, which is a monochrome camera, is arranged opposite the bottom support face and is configured to acquire a detection image of the bottom support face; and an upper computer, which is configured to: extract, on the basis of a detection frame, a first region from the detection image; extract, on the basis of the first region, a second region from the region of the detection image that is defined by the detection frame to generate a third region; remove the third region from the region of the detection image that is defined by the detection frame to extract a defect detection region; and determine, on the basis of the defect detection region, detection determination parameters.

## Description

### CROSS-REFERENCE TO RELATED APPLICATIONS

The present application claims priority to Chinese Patent Application No. 202410326494.6, filed on March 21, 2024 and entitled "BATTERY BLUE FILM WRAPPING SYSTEM AND DETECTION METHOD FOR BATTERY BLUE FILM WRAPPING", which is incorporated herein by reference in its entirety.

### TECHNICAL FIELD

The present application relates to the technical field of batteries, and in particular, to a battery blue film wrapping system and a detection method for battery blue film wrapping.

### BACKGROUND

Certain defects may exist in a battery production process, and the defects need to be detected by using various detection means to improve battery yield. In a fabrication process of a battery, after a bare battery cell is fabricated, the bare battery cell needs to be loaded into a hard shell (e.g., a square aluminum shell). Since a shell material is hard, the unprotected bare battery cell is at risk of being scratched, before loading the bare battery cell into the hard shell, the bare battery cell needs to be wrapped with a soft and flexible blue film (i.e., Mylar film) as an external protective layer of the bare battery cell, thereby ensuring that when the battery cell is placed into the aluminum shell, short-circuiting due to contact between the bare battery cell and the shell caused by scratching a separator of the battery cell does not occur. However, in a blue film wrapping process, due to device precision issues, when the Mylar film is flipped, the separator inside the battery cell is flipped together, exposing electrode plates inside the battery cell and creating potential quality and safety hazards. Therefore, a capability of performing defect detection on the battery cell needs to be achieved after the battery cell is wrapped with the blue film.

### SUMMARY

The present application aims to solve at least one of technical problems existing in the related art. In view of this, an objective of the present application is to provide a battery blue film wrapping system and a detection method for battery blue film wrapping, so as to improve quality and safety of a battery cell after the battery cell is wrapped with a blue film.

An embodiment according to a first aspect of the present application provides a battery blue film wrapping system. The battery blue film wrapping system includes: a battery cell, where the battery cell includes: a battery cell body and a blue film, the battery cell body includes a top surface, a bottom support surface opposite to the top surface, and a first side surface, a second side surface, a third side surface, and a fourth side surface that are sequentially connected between the top surface and the bottom support surface, and the blue film at least wraps around the bottom support surface; a mechanical gripper, where the mechanical gripper includes a first gripper and a second gripper, with the first gripper used to grip one side where the second side surface is located and the second gripper used to grip one side where the fourth side surface is located; a strip light source, where the strip light source is arranged at a preset angle relative to the bottom support surface in a case where the battery cell is at a detection position, with a light source surface of the strip light source facing the bottom support surface; an image acquisition unit, where the image acquisition unit is arranged opposite to the bottom support surface in a case where the battery cell is at the detection position and is used to acquire a detection image of the bottom support surface; and an upper computer, where the upper computer is configured to determine a defect detection result of the bottom support surface according to the detection image acquired by the image acquisition unit. The strip light source is a blue strip light source. The image acquisition unit is a monochrome camera. The detection image includes a first region and a second region. A gray-scale value of the first region is higher than a gray-scale value of the second region. The upper computer is further configured to: in response to the presence of a detection frame with a first preset size on the detection image, extract the first region from the detection image according to the detection frame, where a region of the detection image defined by the detection frame includes both the first region and the second region, the first region corresponds to a region where a defect of the bottom support surface is located, and the second region corresponds to a region within the region of the bottom support surface defined by the detection frame, excluding the defect; extract, based on the extracted first region, the second region from the region of the detection image defined by the detection frame; generate, based on the extracted second region, a third region with a second preset size; remove the third region from the region of the detection image defined by the detection frame to extract a defect detection region; determine a detection determining parameter based on the defect detection region; and determine the defect detection result of the bottom support surface based on the detection determining parameter.

In the technical solution according to this embodiment of the present application, by arranging the strip light source obliquely above the bottom support surface of the battery cell after blue film wrapping, with the light source surface facing the bottom support surface, and using the image acquisition unit to acquire the detection image of the bottom support surface, images of the bottom support surface of the battery cell can be acquired in a case of light source illumination (e.g., high exposure), thereby improving the effectiveness of acquiring the detection image of the bottom support surface, facilitating the upper computer in detecting defects (e.g., the exposed electrode plate defect) on the bottom support surface of the battery cell, enhancing the accuracy of bottom support surface defect detection, and further improving yield and delivery volume of batteries.

Through the combination of the foregoing blue strip light source and the monochrome camera, different imaging effects displayed by the defects and the blue film under high-exposure conditions of the blue strip light source can be utilized, thereby simply and effectively distinguishing the blue film from the exposed electrode plate defect in the detection image, and improving the accuracy of defect detection of the bottom support surface. For example, regarding the exposed electrode plate defect on the battery cell, since an electrode plate itself is dark black, illumination from the blue strip light source causes the exposed electrode plate defect to still present a black form, while the blue film exhibits a white form. Therefore, the excessively long blue film and the exposed electrode plate defect can be simply and effectively distinguished in a case where the blue film is too long and covers the bottom support surface, accommodating both the exposed electrode plate defect and the excessively long blue film on the bottom support surface, thereby detecting the exposed electrode plate defect on the bottom support surface and effectively improving the accuracy of defect detection.

In some embodiments, the first side surface is connected to the bottom support surface through a first edge. An extension direction of the strip light source is consistent with an extension direction of the first edge. The foregoing implementation can facilitate implementing that the entire bottom support surface can be illuminated by the light source, thereby improving the quality of the detection image, facilitating the detection of the defects on the bottom support surface of the battery cell, and enhancing the accuracy of defect detection of the bottom support surface.

In some embodiments, the strip light source is configured to be capable of rotating relative to the bottom support surface of the battery cell located at the detection position, thereby allowing light emitted by the strip light source to illuminate the bottom support surface. In the foregoing implementation, a light source angle of the strip light source can be adjusted according to the position of the battery cell, such that the entire bottom support surface can be illuminated by the light source, thereby improving the quality of the detection image, aiding in the detection of the defects on the bottom support surface of the battery cell, and enhancing the accuracy of defect detection of the bottom support surface.

In some embodiments, the image acquisition unit is located below the strip light source, and is aligned with the battery cell in a horizontal direction in a case where the battery cell is located at the detection position. The foregoing implementation can facilitate the effective acquisition of the detection image of the bottom support surface of the battery cell, thereby improving the quality of the detection image, aiding in the detection of the defects on the bottom support surface of the battery cell, and enhancing the accuracy of defect detection of the bottom support surface.

In some embodiments, the image acquisition unit is configured to be capable of moving relative to the battery cell, to adjust a horizontal distance between the image acquisition unit and the bottom support surface. The foregoing implementation can facilitate the adjustment of a position of the image acquisition unit according to the position of the battery cell, thereby facilitating the effective acquisition of the detection image of the bottom support surface of the battery cell, improving the quality of the detection image, aiding in the detection of the defects on the bottom support surface of the battery cell, and enhancing the accuracy of defect detection of the bottom support surface.

In some embodiments, the mechanical gripper is controlled by the lower computer. The lower computer is configured to: halt a movement of the mechanical gripper in response to the mechanical gripper gripping the battery cell to move to a preset position relative to the image acquisition unit; and send a trigger signal to the upper computer, enabling the upper computer to control the strip light source to illuminate the bottom support surface of the battery cell and the image acquisition unit to acquire the detection image of the bottom support surface of the battery cell. In the foregoing implementation, the lower computer can control the mechanical gripper, the strip light source, and the image acquisition unit, thereby achieving defect detection on the bottom support surface of the battery cell after the battery cell is wrapped with the blue film, increasing an automation degree of a defect detection process, and improving production efficiency.

In some embodiments, the upper computer is further configured to send the defect detection result to the lower computer. The lower computer is configured to: allow the mechanical gripper to place the battery cell onto a logistics line in response to the defect detection result indicating a pass; and allow the mechanical gripper to place the battery cell into a defective battery cell groove in response to the defect detection result indicating a fail. In the foregoing implementation, the defect detection result is sent to the lower computer, thereby allowing the lower computer to control the mechanical gripper to process the battery cell according to the defect detection result, facilitating the automation degree of the defect detection process, and improving the production efficiency.

In some embodiments, the defect detection result includes the exposed electrode plate defect. Since the exposed electrode plate defect is a common defect after the battery cell is wrapped with the blue film, through the foregoing implementation, the quality and safety of the battery cell after the battery cell is wrapped with the blue film can be improved.

An embodiment according to a second aspect of the present application provides a detection method for battery blue film wrapping. The detection method is performed in a battery blue film wrapping system according to the present disclosure. The detection method includes: obtaining a detection image of a bottom support surface of a battery cell by using an image acquisition unit; determining a detection determining parameter based on the detection image; and determining a defect detection result of the bottom support surface of the battery cell according to the detection determining parameter.

According to the system in the foregoing implementation, the detection image of the bottom support surface of the battery cell is obtained, the detection determining parameter is obtained based on the detection image, and the defect detection result of the bottom support surface is determined based on the parameter. Accordingly, the accuracy of defect detection of the bottom support surface can be improved, thereby further improving the yield and delivery volume of the batteries. Compared with a conventional manual measurement method, the foregoing implementation reduces manual intervention, not only accelerating a detection speed to enhance the production efficiency but also reducing a possibility of a human error.

In some embodiments, the strip light source is a blue strip light source. The image acquisition unit is a monochrome camera. The detection image includes a first region and a second region. A gray-scale value of the first region is higher than a gray-scale value of the second region. The determining a detection determining parameter based on the detection image includes: in response to the presence of a detection frame with a first preset size on the detection image, extracting the first region from the detection image according to the detection frame, where a region of the detection image defined by the detection frame includes both the first region and the second region, the first region corresponds to a region where a defect of the bottom support surface is located, and the second region corresponds to a region within the region of the bottom support surface defined by the detection frame, excluding the defect; extracting, based on the extracted first region, the second region from the region of the detection image defined by the detection frame; generating, based on the extracted second region, a third region with a second preset size; removing the third region from the region of the detection image defined by the detection frame to extract a defect detection region; and determining the detection determining parameter based on the defect detection region. In the foregoing implementation, different imaging effects displayed by the defect and the blue film under high-exposure conditions from the blue strip light source may be utilized, thereby enabling true and effective differentiation between the two and significantly enhancing detection accuracy. Furthermore, by setting the detection frame with the first preset size, a region requiring detection within the detection image can be effectively determined, thereby narrowing a detection scope. Then, within the region where the detection frame is located, the second region (i.e., a bright region) with a low gray-scale value is extracted through the first region (i.e., a dark region, containing the defects) with a high gray-scale value. The third region with the second preset size is generated within the second region. By removing the third region from the region where the detection frame is located, a region potentially disturbing defect detection can be removed from the bright region (e.g., a carbon powder interference region in a middle portion of the bottom support surface of the battery cell), thereby further effectively determining the region requiring detection, namely the region containing the defects. Therefore, misjudgment of the defects can be reduced, thereby improving the efficiency and accuracy of defect detection.

In some embodiments, extracting, based on the extracted first region, the second region from the region of the detection image defined by the detection frame includes: performing enlargement processing on the second region in a preset direction to obtain an enlarged first region, where the preset direction is perpendicular to the first side surface of the battery cell; and removing the enlarged first region from the region of the detection image defined by the detection frame to extract the second region. In the foregoing implementation, expansion processing is performed on the first region, such that the second region (i.e., the bright region) with the low gray-scale value can be simply and effectively extracted from the region where the detection frame is located.

In some embodiments, the carbon powder image exists in the second region of the detection image, and the second preset size is determined according to a range of the carbon powder image existing in the second region. In the foregoing implementation, the region potentially disturbing defect detection can be removed from the bright region, thereby further effectively determining the region requiring detection.

In some embodiments, the determining the detection determining parameter based on the defect detection region includes: extracting abnormal pixels with gray-scale values within a gray-scale threshold range for the exposed electrode plate defect from the defect detection region to form an abnormal pixel region, where the detection determining parameter includes an area of the abnormal pixel region; and determining that the exposed electrode plate defect exists on the bottom support surface of the battery cell in response to the area of the abnormal pixel region being greater than a preset area threshold. In the foregoing implementation, the area of the abnormal pixel region is compared with the preset area threshold to determine the exposed electrode plate defect, so as to more accurately determine whether the bottom support surface has the exposed electrode plate defect.

In some embodiments, the obtaining a detection image of a bottom support surface of a battery cell by using an image acquisition unit includes: allowing the strip light source of the battery blue film wrapping system to emit light for illuminating the bottom support surface of the battery cell; and allowing the image acquisition unit to acquire the detection image of the bottom support surface of the battery cell. The foregoing implementation can facilitate the effective acquisition of the detection image of the bottom support surface of the battery cell, thereby improving the quality of the detection image, aiding in the detection of the defects on the bottom support surface of the battery cell, and enhancing the accuracy of defect detection of the bottom support surface.

In some embodiments, the allowing the strip light source of the battery blue film wrapping system to emit light for illuminating the bottom support surface of the battery cell includes: allowing the strip light source to rotate relative to the bottom support surface in response to the bottom support surface being at the detection position, such that the entire bottom support surface can be illuminated by the strip light source; and allowing the strip light source to emit light to the bottom support surface. In the foregoing implementation, a light source angle of the strip light source can be adjusted according to the position of the battery cell, such that the entire bottom support surface can be illuminated by the light source, thereby improving the quality of the detection image, aiding in the detection of the defects on the bottom support surface of the battery cell, and enhancing the accuracy of defect detection of the bottom support surface.

In some embodiments, the allowing the image acquisition unit to acquire the detection image of the bottom support surface of the battery cell includes: allowing the image acquisition unit to move relative to the battery cell in response to the bottom support surface being at the detection position, to adjust a horizontal distance between the image acquisition unit and the bottom support surface; and allowing the image acquisition unit to capture the bottom support surface of the battery cell to obtain the detection image of the bottom support surface. The foregoing implementation can facilitate the adjustment of a position of the image acquisition unit according to the position of the battery cell, thereby facilitating the effective acquisition of the detection image of the bottom support surface of the battery cell, improving the quality of the detection image, aiding in the detection of the defects on the bottom support surface of the battery cell, and enhancing the accuracy of defect detection of the bottom support surface.

In some embodiments, the mechanical gripper is controlled by the lower computer. The detection method further includes: using the lower computer to allow the mechanical gripper of the battery blue film wrapping system to grip the battery cell to move to the detection position. In the foregoing implementation, the bottom support surface of the battery cell can be detected after the battery cell is wrapped with the blue film, thereby increasing an automation degree of a defect detection process, and improving production efficiency.

In some embodiments, the using the lower computer to allow the mechanical gripper of the battery blue film wrapping system to grip the battery cell to move to the detection position includes: using the lower computer to allow the mechanical gripper of the battery blue film wrapping system to grip the battery cell and drive the battery cell to move; and using the lower computer to halt the movement of the mechanical gripper in response to the battery cell being at the detection position. In the foregoing implementation, the bottom support surface of the battery cell can be detected after the battery cell is wrapped with the blue film, thereby increasing an automation degree of a defect detection process, and improving production efficiency.

In some embodiments, the allowing the strip light source of the battery blue film wrapping system to emit light for illuminating the bottom support surface of the battery cell includes: allowing the strip light source of the battery blue film wrapping system to emit light in response to the battery cell being at the detection position, to illuminate the bottom support surface of the battery cell. In the foregoing implementation, the strip light source can be turned on when the battery cell is located at the detection position, thereby saving energy. Meanwhile, the detection image of the bottom support surface of the battery cell is effectively acquired, thereby improving the quality of the detection image, aiding in the detection of the defects on the bottom support surface of the battery cell, and enhancing the accuracy of defect detection of the bottom support surface.

In some embodiments, the mechanical gripper is controlled by the lower computer. The detection method further includes: allowing the upper computer to send the defect detection result to the lower computer, causing the lower computer to: allow the mechanical gripper to place the battery cell onto a logistics line in response to the defect detection result indicating a pass; and allow the mechanical gripper to place the battery cell into a defective battery cell groove in response to the defect detection result indicating a fail. In the foregoing implementation, the defect detection result is sent to the lower computer, thereby allowing the lower computer to control the mechanical gripper to process the battery cell according to the defect detection result, facilitating the automation degree of the defect detection process, and improving the production efficiency.

The foregoing description is only an overview of the technical solutions of the present application. In order to understand the technical means of the present application more clearly such that it can be implemented according to the content of the specification, and to make the foregoing and other objectives, features, and advantages of the present application more apparent, specific implementations of the present application are listed below.

### BRIEF DESCRIPTION OF THE DRAWINGS

In the accompanying drawings, unless otherwise specified, the same reference numerals throughout multiple accompanying drawings represent the same or similar components or elements. These accompanying drawings may not necessarily be drawn to scale. It should be understood that these accompanying drawings only depict some implementations disclosed in the present application and should not be construed as limiting the scope of the present application. In order to provide a clearer explanation of the technical solutions of the embodiments of the present application, a brief introduction will be given to the accompanying drawings required in the embodiments of the present application. It is evident that the accompanying drawings described below are only some embodiments of the present application. For those of ordinary skill in the art, other drawings can be obtained based on these accompanying drawings without any creative effort.
FIG. 1 is a schematic diagram of a battery blue film wrapping system according to some embodiments of the present application, in which no mechanical gripper is shown;
FIG. 2 is a schematic diagram of the battery blue film wrapping system from another perspective as shown in FIG. 1, in which a mechanical gripper is shown;
FIG. 3 is a schematic diagram of determining a defect detection result according to a detection image according to some embodiments of the present application;
FIG. 4 is a flowchart of a detection method for battery blue film wrapping according to some embodiments of the present application; and
FIG. 5 is a flowchart of steps for determining a detection determining parameter based on the detection image in FIG. 4.

Descriptions of reference numerals:
battery blue film wrapping system 1; battery cell 10; battery cell body 18; strip light source 20; image acquisition unit 30; mechanical gripper 40;
first side surface 11; second side surface 12; third side surface 13; fourth side surface 14; top surface 15; bottom support surface 16; first edge 17;
light source surface 21;
first gripper 41; second gripper 42;
detection image 160; exposed electrode plate defect 161; carbon powder image 1611; first region 162; second region 163; detection frame 164; enlarged first region 1621; third region 165; and defect detection region 166.

### DETAILED DESCRIPTION

Embodiments of technical solutions of the present application will be described in detail below with reference to the accompanying drawings. The following embodiments are only used to describe the technical solutions of the present application more explicitly, and are thus only interpreted as examples, rather than being used to limit the protection scope of the present application.

Unless otherwise defined, the meanings of all technical and scientific terms used herein are the same as those usually understood by those skilled in the art to which the present application belongs. The terms used herein are merely intended to describe specific embodiments, but are not intended to limit the present application. The terms "include" and "comprise" and any variants thereof in the specification and claims of the present application and in the description of the accompanying drawings are intended to cover non-exclusive inclusion.

In the description of the embodiments of the present application, the technical terms "first", "second", and the like are only used to distinguish different objects, and should not be understood as indicating or implying relative importance or implying the number, a specific order, or a primary and secondary relationship of technical features indicated. In the description of the embodiments of the present application, "a plurality of" means two or more, unless otherwise expressly and specifically defined.

A reference herein to "an embodiment" means that a particular feature, structure, or characteristic described in conjunction with the embodiments may be included in at least one embodiment of the present application. The term appearing at different positions of the specification may not necessarily refer to the same embodiment or an independent or alternative embodiment that is mutually exclusive with other embodiments. Those skilled in the art explicitly or implicitly understands that the embodiments described herein may be combined with other embodiments.

In the description of the embodiments of the present application, the term "and/or" describes only an association relationship for describing associated objects and represents that three relationships may be present. For example, A and/or B may represent the presence of the three cases: A alone, both A and B, and B alone. Furthermore, the character "/" herein generally indicates an "or" relationship between associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, orientation or position relationships indicated by technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or position relationship shown in the accompanying drawings and are intended to facilitate the description of the embodiments of the present application and simplify the description only, rather than indicate or imply that an apparatus or element referred to must have a particular orientation or be constructed and operated in a particular orientation, and therefore are not to be understood as limitations on the embodiments of the present application.

In the description of the embodiments of the present application, unless otherwise explicitly provided and limited, the technical terms such as "mount", "connect", "couple", and "fix" should be understood broadly, which, for example, may refer to a fixed connection, a detachable connection, or an integral connection; which may refer to a mechanical connection or an electrical connection; which may refer to a direct connection or an indirect connection through an intermediate medium; or which may also refer to a communication between interiors of two elements or an interaction relationship between two elements. For those of ordinary skill in the art, the specific meanings of the above terms in the embodiments of the present application may be interpreted according to specific situations.

In a blue film (e.g., Mylar) wrapping heat-generating unit device, a bare battery cell is placed at a turntable station. A blue film wraps the battery cell while being held by grippers according to a set action. Then, the blue film is thermally fused and bonded to one side of a top cover bracket of the battery cell at a high temperature, causing the blue film to adhere to the top cover bracket and achieving a purpose of wrapping the bare battery cell. However, in a process of wrapping the blue film, due to device precision issues, when the battery cell is flipped during blue film wrapping, a separator inside the battery cell may be flipped together, exposing electrode plates inside the battery cell and creating potential quality and safety hazards. In the related art, image capture is typically performed by using a 2D monochrome camera (e.g., a charge coupled device (CCD) industrial camera), ambient lighting is performed by using white strip light and red strip light, and an exposed electrode plate defect is detected under conditions of low red light exposure. However, since a surface of the bare battery cell is wrapped with the blue film, when the process changes or the device is unstable, the blue film may cover a position of the exposed electrode plates of the battery cell. In the foregoing detection method, there is almost no difference in gray-scale values between the blue film and the exposed electrode plate defect, ultimately leading to misidentification of the blue film as the exposed electrode plate defect. Therefore, the foregoing detection method cannot distinguish the blue film from the exposed electrode plate defect, making it unable to maintain and inspect the exposed electrode plate defect on a bottom support surface. Furthermore, in the related art, generally, detection of a Mylar wrapping single upright device is involved, and cannot be applied to a Mylar wrapping single horizontal device, resulting in imitations. In addition, the detection of the potential exposed electrode plate defect on the bottom support surface is not involved, posing quality risks.

In view of this, an embodiment of the present application provides a battery cell blue film wrapping system that is applicable to a horizontal device and capable of detecting defects of the bottom support surface. By arranging a strip light source obliquely above the bottom support surface of a battery cell after blue film wrapping, with a light source surface facing the bottom support surface, and using an image acquisition unit to acquire detection images of the bottom support surface, images of the bottom support surface of the battery cell can be acquired in a case of light source illumination (e.g., high exposure), thereby improving the effectiveness of acquiring the detection image of the bottom support surface, facilitating an upper computer in detecting defects (e.g., the exposed electrode plate defect) on the bottom support surface of the battery cell, enhancing the accuracy of bottom support surface defect detection, and further improving yield and delivery volume of batteries.

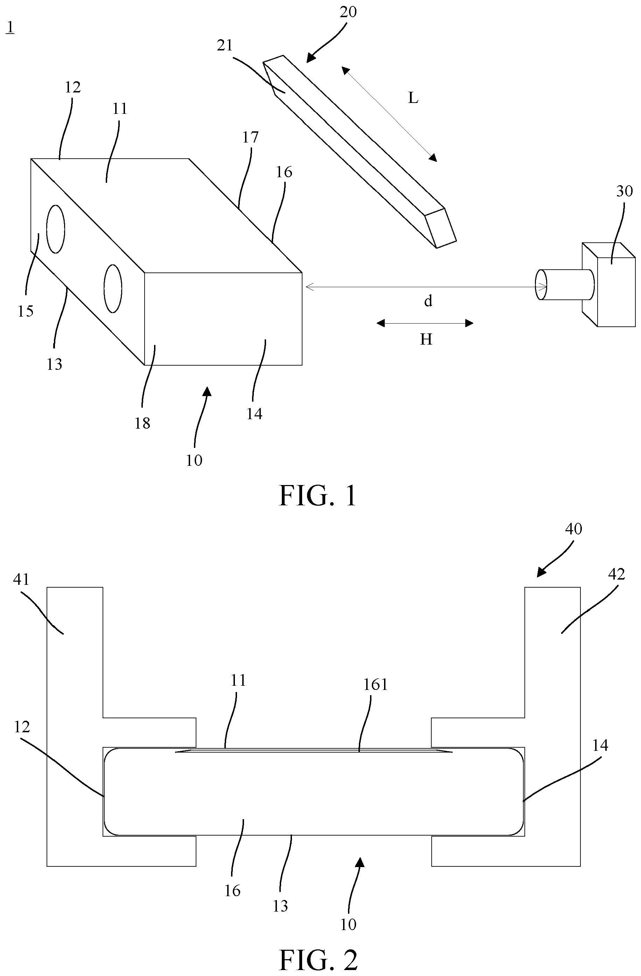

FIG. 1 is a schematic diagram of a battery blue film wrapping system 1 according to some embodiments of the present application, in which no mechanical gripper 40 is shown. FIG. 2 is a schematic diagram of the battery blue film wrapping system from another perspective as shown in FIG. 1, in which a mechanical gripper 40 is shown.

As shown in FIG. 1 and FIG. 2, the battery blue film wrapping system 1 includes a battery cell 10, where the battery cell 10 includes: a battery cell body 18 and a blue film, the battery cell body 18 includes a top surface 15, a bottom support surface 16 opposite to the top surface 15, and a first side surface 11, a second side surface 12, a third side surface 13, and a fourth side surface 14 that are sequentially connected between the top surface 15 and the bottom support surface 16, and the blue film at least wraps around the bottom support surface 16; the mechanical gripper 40, where the mechanical gripper 40 includes a first gripper 41 and a second gripper 42, with the first gripper 41 used to grip one side where the second side surface 12 is located and the second gripper 42 used to grip one side where the fourth side surface 14 is located; a strip light source 20, where the strip light source 20 is arranged at a preset angle relative to the bottom support surface 16 in a case where the battery cell 10 is at a detection position, with a light source surface 21 of the strip light source 20 facing the bottom support surface 16; an image acquisition unit 30, where the image acquisition unit 30 is arranged opposite to the bottom support surface 16 in a case where the battery cell 10 is at the detection position and is used to acquire a detection image 160 of the bottom support surface 16; and an upper computer, where the upper computer is configured to determine a defect detection result of the bottom support surface 16 according to the detection image 160 acquired by the image acquisition unit 30.

The top surface 15 refers to an upper surface in a case where the battery cell 10 is placed normally, namely, a surface where electrodes of the battery cell 10 are located, while the bottom support surface 16 refers to a surface opposite to the top surface 15, which abuts against a placement surface in the case where the battery cell 10 is placed normally.

In a case where the battery cell 10 is a cuboid or cube, the battery cell body 18 includes the top surface 15, the bottom support surface 16 opposite to the top surface 15, and the first side surface 11, the second side surface 12, the third side surface 13, and the fourth side surface 14 that are sequentially connected between the top surface 15 and the bottom support surface 16.

To reduce scratches of a separator of the battery cell 10 when the battery cell 10 is placed into an aluminum shell, a surface of the bare battery cell 10 is wrapped with the blue film (e.g., a blue film). The blue film may, for example, wrap around at least one of the first side surface 11, the second side surface 12, the third side surface 13, and the fourth side surface 14. In a case where the blue film is excessively long, the blue film may also wrap around at least part of the bottom support surface 16, such as an exposed electrode plate defect 161 on the bottom support surface 16.

As shown in FIG. 2, the mechanical gripper 40 grips the second side surface 12 and the fourth side surface 14 respectively, facilitating the exposure of the bottom support surface 16. The mechanical gripper is used to grip the battery cell in a battery cell movement and detection process and may be controlled by a lower computer used to control an underlying production device. After being wrapped with the blue film, the battery cell 10 moves to the detection position (i.e., a preset position relative to the strip light source 20 and/or the image acquisition unit 30) under the grip of the mechanical gripper 40. In this case, a program within the lower computer controls the mechanical gripper 40 to stop moving and simultaneously sends a trigger signal to visual inspection software in the upper computer, causing the strip light source 20 to emit light to illuminate the bottom support surface 16 and enabling the image acquisition unit 30 to take a photograph.

The strip light source 20 may be a red strip light source, a blue strip light source, or the like. To distinguish the blue film from the exposed electrode plate defect in the detection image 160, the strip light source may be set as a blue light source, to generate blue high exposure. As shown in FIG. 1, the strip light source may be arranged obliquely above the bottom support surface 16 and kept at a certain distance from the battery cell 10 to illuminate the bottom support surface 16.

A specific type of the image acquisition unit 30 is not limited. For example, a CCD industrial camera, a complementary metal-oxide-semiconductor (CMOS) industrial camera, or the like may be used. For another example, a line-array camera or an area-array camera may be used. The image acquisition unit 30 may be a color camera, a monochrome camera, or the like.

The image acquisition unit 30 may be arranged opposite to the bottom support surface 16 (e.g., directly opposite as shown in FIG. 1 or at a certain angle relative to the bottom support surface) to facilitate the acquisition of the detection image of the bottom support surface 16.

The visual inspection software may be installed in the upper computer to determine the defect detection result of the bottom support surface 16 according to the detection image acquired by the image acquisition unit 30.

By arranging the strip light source obliquely above the bottom support surface 16 of the battery cell 10 wrapped with the blue film, with the light source surface 21 facing the bottom support surface 16, and using the image acquisition unit 30 to acquire the detection image 160 of the bottom support surface 16, images of the bottom support surface 16 of the battery cell 10 may be acquired in a case of light source illumination (e.g., high exposure), thereby improving the effectiveness of acquiring the detection image 160 of the bottom support surface 16, facilitating the upper computer in detecting defects (e.g., the exposed electrode plate defect) on the bottom support surface 16 of the battery cell 10, enhancing the accuracy of defect detection of the bottom support surface 16, and further improving yield and delivery volume of batteries.

According to some embodiments of the present application, as shown in FIG. 1, the first side surface 11 is connected to the bottom support surface 16 through a first edge 17, and an extension direction L of the strip light source 20 is consistent with that of the first edge 17.

As shown in FIG. 1, the extension direction L of the strip light source 20 is consistent with that of the first edge 17, meaning that the strip light source 20 is parallel to the first edge 17 and is located obliquely above the bottom support surface 16.

The foregoing implementation may facilitate implementing that the entire bottom support surface 16 can be illuminated by the light source, thereby improving the quality of the detection image 160, facilitating the detection of the defects on the bottom support surface 16 of the battery cell 10, and enhancing the accuracy of defect detection of the bottom support surface 16.

According to some embodiments of the present application, the strip light source 20 is the blue strip light source, and the image acquisition unit 30 is the monochrome camera.

Using the monochrome camera may facilitate the detection of the defects on the bottom support surface 16 through gray-scale values, increasing the processing efficiency of the upper computer.

For example, regarding the exposed electrode plate defect on the battery cell 10, since the electrode plate itself is dark black, high-exposure illumination from the blue strip light source causes the exposed electrode plate defect to still present a black form, while the blue film exhibits a white form. Therefore, the excessively long blue film and the exposed electrode plate defect in the detection image 160 may be distinguished, as there is a significant difference in gray-scale values between the two under blue high-exposure illumination. Accordingly, even with the monochrome camera, the blue film and the exposed electrode plate defect can be well distinguished.

Through the combination of the foregoing blue strip light source and the monochrome camera, different imaging effects displayed by the defects and the blue film under high-exposure conditions of the blue strip light source can be utilized, thereby simply and effectively distinguishing the blue film from the exposed electrode plate defect in the detection image 160, and improving the accuracy of defect detection of the bottom support surface 16.

According to some embodiments of the present application, the strip light source 20 is configured to be capable of rotating relative to the bottom support surface of the battery cell located at the detection position, thereby allowing light emitted by the strip light source 20 to illuminate the bottom support surface 16.

In other words, a light source angle of the strip light source 20 may be adjusted, for example, a rotation angle is less than or equal to about 30 degrees, such that the strip light source 20 can adjust the light source angle according to an actual placement position of the battery cell 10, thereby allowing the emitted light to illuminate the bottom support surface 16. The strip light source can rotate relative to the bottom support surface of the battery cell at the detection position, with a rotation axis for rotating set to be, for example, consistent with the extension direction L of the strip light source (or set to another direction or another position). After the light source angle of the strip light source 20 is adjusted, the image acquisition unit is used to acquire the detection image of the bottom support surface, facilitating the obtaining of images of good quality.

In the foregoing implementation, the light source angle of the strip light source can be adjusted according to the position of the battery cell 10, such that the entire bottom support surface 16 can be illuminated by the light source, thereby improving the quality of the detection image, aiding in the detection of the defects on the bottom support surface 16 of the battery cell 10, and enhancing the accuracy of defect detection of the bottom support surface 16.

According to some embodiments of the present application, as shown in FIG. 1, the image acquisition unit 30 is located below the strip light source 20, and is aligned with the battery cell 10 in a horizontal direction H in a case where the battery cell 10 is located at the detection position.

The image acquisition unit 30 is located right below the strip light source 20, obliquely below the strip light source 20 (as shown in FIG. 1), or the like.

The image acquisition unit 30 is kept on the same horizontal line as the battery cell 10. That is, the image acquisition unit 30 is arranged in a horizontal extension direction of the battery cell 10 and faces directly towards the bottom support surface 16. Accordingly, the bottom support surface 16 in the acquired detection image 160 can remain undistorted, facilitating subsequent defect detection using the detection image 160.

The foregoing implementation can facilitate the effective acquisition of the detection image 160 of the bottom support surface 16 of the battery cell 10, thereby improving the quality of the detection image, aiding in the detection of the defects on the bottom support surface 16 of the battery cell 10, and enhancing the accuracy of defect detection of the bottom support surface 16.

According to some embodiments of the present application, the image acquisition unit 30 is configured to be capable of moving relative to the battery cell 10, to adjust a horizontal distance d between the image acquisition unit 30 and the bottom support surface 16.

For example, the image acquisition unit 30 may move in a horizontal direction (or, a direction forming a certain angle with the horizontal direction), to adjust the horizontal distance d between the image acquisition unit 30 and the bottom support surface 16. In some examples, the horizontal distance d may be set according to an optimal working distance of a lens of the image acquisition unit 30, or may be set as a lens optimal working distance.

The foregoing implementation can facilitate the adjustment of a position of the image acquisition unit 30 according to the position of the battery cell 10, thereby facilitating the effective acquisition of the detection image of the bottom support surface 16 of the battery cell 10, improving the quality of the detection image, aiding in the detection of the defects on the bottom support surface 16 of the battery cell 10, and enhancing the accuracy of defect detection of the bottom support surface 16.

According to some embodiments of the present application, the mechanical gripper 40 is controlled by the lower computer. The lower computer is configured to: halt a movement of the mechanical gripper 40 in response to the mechanical gripper 40 gripping the battery cell 10 to move to a preset position relative to the image acquisition unit 30; and send a trigger signal to the upper computer, enabling the upper computer to control the strip light source 20 to illuminate the bottom support surface 16 of the battery cell 10 and the image acquisition unit 30 to acquire the detection image of the bottom support surface 16 of the battery cell 10.

The lower computer is a device connected to the upper computer and is used for controlling the underlying production device, such as controlling a mechanical gripper and the upper computer in the battery blue film wrapping system. The battery blue film wrapping system 1 is electrically connected to the lower computer, and the battery blue film wrapping system 1 may communicate with the lower computer in real time.

In some embodiments, after being wrapped with the blue film, the battery cell 10 moves to the detection position under the grip of the mechanical gripper 40, namely a preset position relative to the strip light source 20 and/or the image acquisition unit 30. In this case, the program within the lower computer controls the mechanical gripper 40 to stop moving and simultaneously sends the trigger signal to the visual inspection software in the upper computer, thereby allowing the visual inspection software in the upper computer to control the strip light source 20 to emit light to illuminate the bottom support surface 16 and control the image acquisition unit 30 to take a photograph.

In some embodiments, the mechanical gripper may be a robotic arm of an automatic feeding and discharging device, which may grip the battery cell 10 for the movement and detection in response to instructions from the lower computer.

In the foregoing implementation, the lower computer may control the mechanical gripper 40, the strip light source 20, and the image acquisition unit 30, thereby achieving defect detection on the bottom support surface 16 of the battery cell 10 after the battery cell 10 is wrapped with the blue film, increasing an automation degree of a defect detection process, and improving production efficiency.

According to some embodiments of the present application, the upper computer is further configured to send the defect detection result to the lower computer. The lower computer is configured to: allow the mechanical gripper 40 to place the battery cell 10 onto a logistics line in response to the defect detection result indicating a pass; and allow the mechanical gripper 40 to place the battery cell 10 into a defective battery cell groove in response to the defect detection result indicating a fail.

After determining the defect detection result according to the detection image, the upper computer sends the defect detection result to the lower computer. The lower computer determines, according to the defect detection result, whether to return the battery cell to the logistics line for continuous circulation (in a case where the defect detection result indicates a pass) or to place the battery cell in the defective battery cell groove for recycling (in a case where the defect detection result indicates a fail).

In the foregoing implementation, the defect detection result is sent to the lower computer, thereby allowing the lower computer to control the mechanical gripper 40 to process the battery cell 10 according to the defect detection result, facilitating the automation degree of the defect detection process, and improving the production efficiency.

According to some embodiments of the present application, the defect detection result includes the exposed electrode plate defect.

In other words, the upper computer may determine whether the bottom support surface 16 of the battery cell 10 has the exposed electrode plate defect 161 according to the image of the bottom support surface 16 acquired by the image acquisition unit 30.

Since the exposed electrode plate defect is a common defect after the battery cell 10 is wrapped with the blue film, through the foregoing implementation, the quality and safety of the battery cell 10 after the battery cell 10 is wrapped with the blue film can be improved.

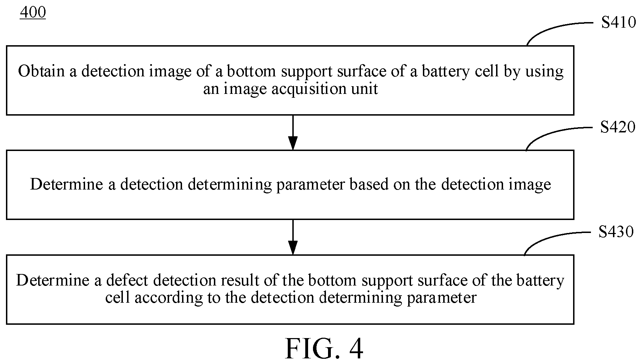

FIG. 4 is a flowchart of a detection method 400 for battery blue film wrapping according to some embodiments of the present application.

The detection method 400 for battery blue film wrapping is performed in the battery blue film wrapping system 1 according to the present disclosure. In addition, as shown in FIG. 1 to FIG. 4, the detection method 400 includes the following steps: Step S410: Obtain a detection image 160 of a bottom support surface 16 of a battery cell 10 by using an image acquisition unit 30. Step S420: Determine a detection determining parameter based on the detection image 160. Step S430: Determine a defect detection result of the bottom support surface 16 of the battery cell 10 according to the detection determining parameter.

The foregoing method may be performed at an upper computer of the battery blue film wrapping system 1.

The detection determining parameter may include a gray-scale value on the detection image 160 or an area of a pixel on the detection image 160 that has a gray-scale value meeting conditions (e.g., a gray-scale parameter conforming to an exposed electrode plate defect, and gray-scales in an exposed electrode plate area ranging from 70 to 110).

For example, the upper computer determines the detection determining parameter according to the detection image 160 acquired by the image acquisition unit 30. The detection determining parameter includes the area of the pixel on the detection image 160 that has the gray-scale value meeting the conditions. Then, the upper computer determines the defect detection result according to the foregoing detection determining parameter. For example, the area of the pixel that has the gray-scale value meeting the conditions is compared with an area threshold parameter (e.g., set to 20 pixels, or greater than 20 pixels), and the defect detection result is determined based on a comparison result (e.g., whether the area is greater than the area threshold parameter). In other words, whether an area that meets defect detection specifications is determined. If yes, it indicates the presence of defects; and if not, it indicates the absence of defects.

According to the system in the foregoing implementation, the detection image 160 of the bottom support surface 16 of the battery cell 10 is obtained, the detection determining parameter is obtained based on the detection image 160, and the defect detection result of the bottom support surface 16 is determined based on the parameter. Accordingly, the accuracy of defect detection of the bottom support surface 16 can be improved, thereby further improving the yield and delivery volume of the batteries. Compared with a conventional manual measurement method, the foregoing implementation reduces manual intervention, not only accelerating a detection speed to enhance the production efficiency but also reducing a possibility of a human error.

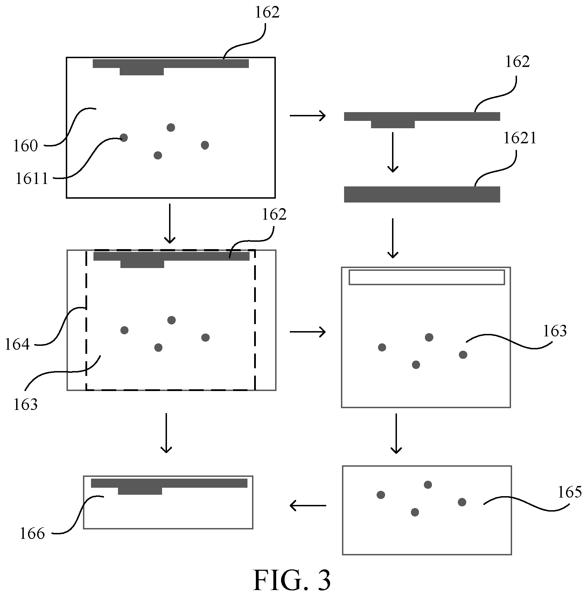

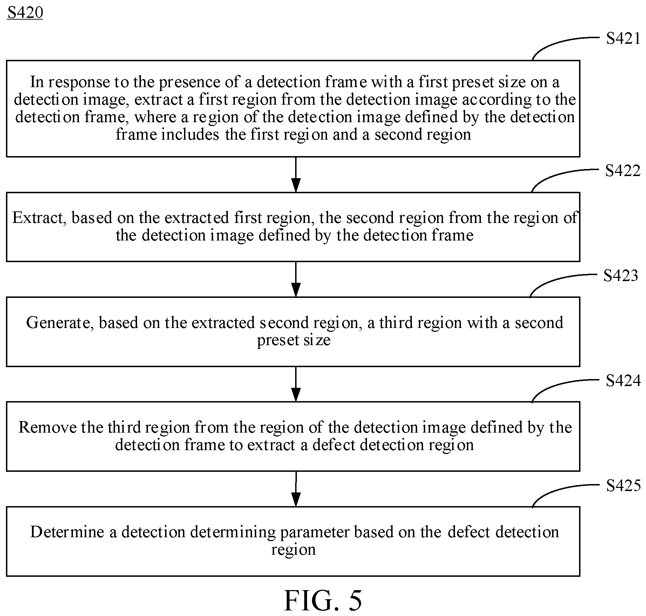

According to some embodiments of the present application, the strip light source 20 is a blue strip light source. The image acquisition unit 30 is a monochrome camera. The detection image 160 includes a first region 162 and a second region 163. A gray-scale value of the first region 162 is higher than a gray-scale value of the second region 163. As shown in FIG. 3 and FIG. 5, the step S420 of determining a detection determining parameter based on the detection image 160 includes the following steps: Step S421: In response to the presence of a detection frame 164 with a first preset size on the detection image 160, extract the first region 162 from the detection image 160 according to the detection frame 164, where a region of the detection image 160 defined by the detection frame 164 includes both the first region 162 and the second region 163. Step S422: Extract, based on the extracted first region 162, the second region 163 from the region of the detection image 160 defined by the detection frame 164. Step S423: Generate, based on the extracted second region 163, a third region 165 with a second preset size. Step S424: Remove the third region 165 from the region of the detection image 160 defined by the detection frame 164 to extract a defect detection region 166. Step S425: Determine the detection determining parameter based on the defect detection region 166.

In some embodiments, for example, the detection frame 164 with the first preset size may be annotated within the detection image 160 either manually or automatically by a computer, so as to enclose a dark region (i.e., a region containing defects) and a bright region. The detection frame 164 may be rectangular, circular, or another shape. In a case where the detection frame 164 is rectangular, a length of the detection frame 164 may be greater than a length of the defect, while a width may equal to a width of the bottom support surface 16.

In some embodiments, as shown in FIG. 3, in the step S421, the first region 162 may be extracted from the detection image 160 within the detection frame 164 according to a gray-scale difference between the first region 162 and the second region 163.

In some embodiments, as shown in FIG. 3, in the step S422, subtraction processing may be performed on the region of the detection image 160 defined by the detection frame 164 and the extracted first region 162, to extract the second region 163.

In some embodiments, as shown in FIG. 3, in the step S423, the extracted second region 163 may be cropped to generate the third region 165 with the second preset size (i.e., a middle interference region in the bright region containing a carbon powder image 1611). In a case where the third region 165 is rectangular, a length of the third region 165 may be equal to the length of the detection frame 164, and a width of the third region 165 may be empirically set to cover the region containing the carbon powder image 1611. A lower edge of the third region 165 may coincide with a lower edge of the detection frame 164.

In some embodiments, as shown in FIG. 3, in the step S424, subtraction processing may be performed on the region of the detection image 160 defined by the detection frame 164 and the third region 165, to extract the defect detection region 166.

In some embodiments, in the step S425, morphological detection and detection of dark regions based on gray-scale characteristics may be carried out within the defect detection region 166, that is, gray-scale binarization is performed to facilitate the obtaining of the detection determining parameter.

In the foregoing implementation, different imaging effects displayed by the defect and the blue film under high-exposure conditions from the blue strip light source may be utilized, thereby enabling true and effective differentiation between the two and significantly enhancing detection accuracy. Furthermore, by setting the detection frame 164 with the first preset size, a region requiring detection within the detection image 160 can be effectively determined, thereby narrowing a detection scope. Then, within the region where the detection frame 164 is located, the second region 163 (i.e., the bright region) with a low gray-scale value is extracted through the first region 162 (i.e., the dark region, containing the defects) with a high gray-scale value. The third region 165 with the second preset size is generated within the second region 163. By removing the third region 165 from the region where the detection frame 164 is located, a region potentially disturbing defect detection can be removed from the bright region (e.g., a carbon powder interference region in a middle portion of the bottom support surface 16 of the battery cell 10), thereby further effectively determining the region requiring detection, namely the region containing the defects. Therefore, misjudgment of the defects can be reduced, thereby improving the efficiency and accuracy of defect detection.

According to some embodiments of the present application, the step S422 of extracting, based on the extracted first region 162, the second region 163 from the region of the detection image 160 defined by the detection frame 164 includes: performing enlargement processing on the second region 163 in a preset direction to obtain an enlarged first region 1621, where the preset direction is perpendicular to the first side surface 11 of the battery cell 10; and removing the enlarged first region 1621 from the region of the detection image 160 defined by the detection frame 164 to extract the second region 163.

In some embodiments, as shown in FIG. 3, the defect may not be continuous. By performing the enlargement processing (i.e., expansion) in a direction (i.e., vertically) perpendicular to the first side surface 11 of the battery cell 10, discontinuous regions may be filled to obtain the enlarged first region 1621, facilitating the subsequent extraction of the second region 163 on that basis.

In the foregoing implementation, expansion processing is performed on the first region 162, such that the second region 163 (i.e., the bright region) with the low gray-scale value can be simply and effectively extracted from the region where the detection frame 164 is located.

According to some embodiments of the present application, the carbon powder image 1611 exists in the second region of the detection image 160, and the second preset size is determined according to a range of the carbon powder image 1611 existing in the second region 163.

In some embodiments, the presence of the carbon powder image 1611 in the bright region of the detection image 160 is allowed (in other words, small particles of carbon powder scattered on the bottom support surface of the battery cell are allowed). Therefore, to exclude the region where the carbon powder image 1611 is located in the bright region, the third region 165 with the second preset size is generated within the second region 163.

In the foregoing implementation, the region potentially disturbing defect detection can be removed from the bright region, thereby further effectively determining the region requiring detection.

According to some embodiments of the present application, the step S425 of determining the detection determining parameter based on the defect detection region 166 includes: extracting abnormal pixels with gray-scale values within a gray-scale threshold range for the exposed electrode plate defect from the defect detection region 166 to form an abnormal pixel region, where the detection determining parameter includes an area of the abnormal pixel region; and determining that the exposed electrode plate defect exists on the bottom support surface 16 of the battery cell 10 in response to the area of the abnormal pixel region being greater than a preset area threshold.

In some embodiments, the gray-scale threshold range for the exposed electrode plate defect may be, for example, 70 to 110. The preset area threshold may be, for example, 20 pixels or more than 20 pixels.

In the foregoing steps, whether a region meeting an exposed electrode plate defect detection specification exists may be determined. If yes, it indicates the presence of the defect; and if not, it indicates the absence of the defect.

In the foregoing implementation, the area of the abnormal pixel region is compared with the preset area threshold to determine the exposed electrode plate defect, so as to more accurately determine whether the bottom support surface 16 has the exposed electrode plate defect.

The technical solutions of the present application are further described below through some specific embodiments.

As shown in FIG. 1 to FIG. 5, the battery blue film wrapping system 1 includes a battery cell 10, where the battery cell 10 includes: a battery cell body 18 and a blue film, the battery cell body 18 includes a top surface 15, a bottom support surface 16 opposite to the top surface 15, and a first side surface 11, a second side surface 12, a third side surface 13, and a fourth side surface 14 that are sequentially connected between the top surface 15 and the bottom support surface 16, and the blue film at least wraps around the bottom support surface 16; a mechanical gripper 40, where the mechanical gripper 40 includes a first gripper 41 and a second gripper 42, with the first gripper 41 used to grip one side where the second side surface 12 is located and the second gripper 42 used to grip one side where the fourth side surface 14 is located; a strip light source 20, where the strip light source 20 is obliquely arranged above the bottom support surface 16, with a light source surface 21 of the strip light source 20 facing the bottom support surface 16; an image acquisition unit 30, where the image acquisition unit 30 is arranged opposite to the bottom support surface 16 and is used to acquire a detection image 160 of the bottom support surface 16; and an upper computer, where the upper computer is configured to determine a defect detection result of the bottom support surface 16 according to the detection image 160 acquired by the image acquisition unit 30.

The first side surface 11 is connected to the bottom support surface 16 through a first edge 17, and an extension direction of the strip light source 20 is consistent with that of the first edge 17. The strip light source 20 is a blue strip light source, and the image acquisition unit 30 is a monochrome camera. The image acquisition unit 30 is aligned with the battery cell 10 in a horizontal direction.

The mechanical gripper 40, the strip light source, and the image acquisition unit 30 are controlled by a lower computer. The lower computer is configured to: halt a movement of the mechanical gripper 40 in response to the mechanical gripper 40 gripping the battery cell 10 to move to a preset position relative to the image acquisition unit 30; allow the strip light source to illuminate the bottom support surface 16 of the battery cell 10; and allow the image acquisition unit 30 to acquire the detection image 160 of the bottom support surface 16 of the battery cell 10. The upper computer is further configured to send the defect detection result to the lower computer. The lower computer is configured to: allow the mechanical gripper 40 to place the battery cell 10 onto a logistics line in response to the defect detection result indicating a pass; and allow the mechanical gripper 40 to place the battery cell 10 into a defective battery cell groove in response to the defect detection result indicating a fail.

Finally, it should be noted that the foregoing embodiments are only used to illustrate the technical solutions of the present application, rather than limiting the present application. Although the present applicant has been described in detail with reference to the foregoing embodiments, those of ordinary skill in the art should understand that the technical solutions described in the foregoing embodiments can still be modified or some or all of the technical features thereof can be equivalently substituted. However, these modifications or substitutions do not depart the essence of the corresponding technical solution from the scope of the technical solutions of the embodiments of the present application, and should be covered in the scope of the claims and specification of the present application. In particular, the technical features mentioned in the embodiments can be combined in any way provided that there is no structural conflict. The present application is not limited to the specific embodiments disclosed herein, but includes all technical solutions that fall within the scope of the claims.

## Claims

1. A battery blue film wrapping system, comprising:
a battery cell, the battery cell comprising:
a battery cell body, the battery cell body comprising a top surface, a bottom support surface opposite to the top surface, and a first side surface, a second side surface, a third side surface, and a fourth side surface that are sequentially connected between the top surface and the bottom support surface; and
a blue film, the blue film at least wrapping around the bottom support surface;
a mechanical gripper, the mechanical gripper comprising a first gripper and a second gripper, with the first gripper used to grip one side where the second side surface is located and the second gripper used to grip one side where the fourth side surface is located;
a strip light source, the strip light source being arranged at a preset angle relative to the bottom support surface in a case where the battery cell is at a detection position, with a light source surface of the strip light source facing the bottom support surface;
an image acquisition unit, the image acquisition unit being arranged opposite to the bottom support surface in a case where the battery cell is at the detection position and being used to acquire a detection image of the bottom support surface; and
an upper computer, configured to determine a defect detection result of the bottom support surface according to the detection image acquired by the image acquisition unit, wherein
the strip light source is a blue strip light source, and the image acquisition unit is a monochrome camera; and wherein
the detection image comprises a first region and a second region, a gray-scale value of the first region is higher than a gray-scale value of the second region, and the upper computer is further configured to:
in response to the presence of a detection frame with a first preset size on the detection image, extract the first region from the detection image according to the detection frame, wherein a region of the detection image defined by the detection frame comprises both the first region and the second region, the first region corresponds to a region where a defect of the bottom support surface is located, and the second region corresponds to a region within the region of the bottom support surface defined by the detection frame, excluding the defect;
extract, based on the extracted first region, the second region from the region of the detection image defined by the detection frame;
generate, based on the extracted second region, a third region with a second preset size;
remove the third region from the region of the detection image defined by the detection frame to extract a defect detection region;
determine a detection determining parameter based on the defect detection region; and
determine the defect detection result of the bottom support surface based on the detection determining parameter.

2. The system according to claim 1, wherein the first side surface is connected to the bottom support surface through a first edge, and an extension direction of the strip light source is consistent with an extension direction of the first edge.

3. The system according to claim 1 or 2, wherein the strip light source is configured to be capable of rotating relative to the bottom support surface of the battery cell located at the detection position, to allow light emitted by the strip light source to illuminate the bottom support surface.

4. The system according to any one of claims 1 to 3, wherein the image acquisition unit is located below the strip light source, and is aligned with the battery cell in a horizontal direction in a case where the battery cell is located at the detection position.

5. The system according to claim 4, wherein the image acquisition unit is configured to be capable of moving relative to the battery cell, to adjust a horizontal distance between the image acquisition unit and the bottom support surface.

6. The system according to any one of claims 1 to 5, wherein the mechanical gripper is controlled by a lower computer, and
the lower computer is configured to:
halt a movement of the mechanical gripper in response to the mechanical gripper gripping the battery cell to move to a preset position relative to the image acquisition unit; and
send a trigger signal to the upper computer, enabling the upper computer to control the strip light source to illuminate the bottom support surface of the battery cell and the image acquisition unit to acquire the detection image of the bottom support surface of the battery cell.

7. The system according to claim 6, wherein
the upper computer is further configured to send the defect detection result to the lower computer; and
the lower computer is configured to:
allow the mechanical gripper to place the battery cell onto a logistics line in response to the defect detection result indicating a pass; and
allow the mechanical gripper to place the battery cell into a defective battery cell groove in response to the defect detection result indicating a fail.

8. The system according to any one of claims 1 to 5, wherein the defect detection result comprises an exposed electrode plate defect.

9. A detection method for battery blue film wrapping, wherein the detection method is performed in the battery blue film wrapping system according to any one of claims 1 to 8, and the detection method comprises:
obtaining a detection image of the bottom support surface of the battery cell by using the image acquisition unit;
determining, by the upper computer, a detection determining parameter based on the detection image; and
determining a defect detection result of the bottom support surface of the battery cell according to the detection determining parameter.

10. The detection method according to claim 9, wherein the strip light source is a blue strip light source, the image acquisition unit is a monochrome camera, the detection image comprises a first region and a second region, a gray-scale value of the first region is higher than a gray-scale value of the second region, and the determining a detection determining parameter based on the detection image comprises:
in response to the presence of a detection frame with a first preset size on the detection image, extracting the first region from the detection image according to the detection frame, wherein a region of the detection image defined by the detection frame comprises both the first region and the second region, the first region corresponds to a region where a defect of the bottom support surface is located, and the second region corresponds to a region within the region of the bottom support surface defined by the detection frame, excluding the defect;
extracting, based on the extracted first region, the second region from the region of the detection image defined by the detection frame;
generating, based on the extracted second region, a third region with a second preset size;
removing the third region from the region of the detection image defined by the detection frame to extract a defect detection region; and
determining the detection determining parameter based on the defect detection region.

11. The detection method according to claim 9 or 10, wherein the extracting, based on the extracted first region, the second region from the region of the detection image defined by the detection frame comprises:
performing enlargement processing on the second region in a preset direction to obtain an enlarged first region, wherein the preset direction is perpendicular to the first side surface of the battery cell; and
removing the enlarged first region from the region of the detection image defined by the detection frame to extract the second region.

12. The detection method according to claim 9 or 10, wherein a carbon powder image exists in the second region of the detection image, and the second preset size is determined according to a range of the carbon powder image existing in the second region.

13. The detection method according to any one of claims 9 to 12, wherein the determining the detection determining parameter based on the defect detection region comprises:
extracting abnormal pixels with gray-scale values within a gray-scale threshold range for the exposed electrode plate defect from the defect detection region to form an abnormal pixel region, wherein the detection determining parameter comprises an area of the abnormal pixel region; and
determining that the exposed electrode plate defect exists on the bottom support surface of the battery cell in response to the area of the abnormal pixel region being greater than a preset area threshold.

14. The detection method according to any one of claims 9 to 12, wherein the obtaining a detection image of the bottom support surface of the battery cell by using the image acquisition unit comprises:
allowing the strip light source of the battery blue film wrapping system to emit light for illuminating the bottom support surface of the battery cell; and
allowing the image acquisition unit to acquire the detection image of the bottom support surface of the battery cell.

15. The detection method according to any one of claim 14, wherein the allowing the strip light source of the battery blue film wrapping system to emit light for illuminating the bottom support surface of the battery cell comprises:
allowing the strip light source to rotate relative to the bottom support surface in response to the bottom support surface being at the detection position, such that the entire bottom support surface is enabled to be illuminated by the strip light source; and
allowing the strip light source to emit light to the bottom support surface.

16. The detection method according to claim 14 or 15, wherein the acquiring a detection image of the bottom support surface of the battery cell by using the image acquisition unit comprises:
allowing the image acquisition unit to move relative to the battery cell in response to the bottom support surface being at the detection position, to adjust a horizontal distance between the image acquisition unit and the bottom support surface; and
allowing the image acquisition unit to capture the bottom support surface of the battery cell to obtain the detection image of the bottom support surface.

17. The detection method according to any one of claims 14 to 16, wherein the mechanical gripper is controlled by the lower computer, and the detection method further comprises:
using the lower computer to allow the mechanical gripper of the battery blue film wrapping system to grip the battery cell to move to the detection position.

18. The detection method according to claim 17, wherein the using the lower computer to allow the mechanical gripper of the battery blue film wrapping system to grip the battery cell to move to the detection position comprises:
using the lower computer to allow the mechanical gripper of the battery blue film wrapping system to grip the battery cell and drive the battery cell to move; and
using the lower computer to halt the movement of the mechanical gripper in response to the battery cell being at the detection position.

19. The detection method according to claim 17 or 18, wherein the allowing the strip light source of the battery blue film wrapping system to emit light for illuminating the bottom support surface of the battery cell comprises:
allowing the strip light source of the battery blue film wrapping system to emit light for illuminating the bottom support surface of the battery cell in response to the battery cell being at the detection position.

20. The detection method according to any one of claims 9 to 19, wherein the mechanical gripper is controlled by the lower computer, and the detection method further comprises:
allowing the upper computer to send the defect detection result to the lower computer, causing the lower computer to:
allow the mechanical gripper to place the battery cell onto a logistics line in response to the defect detection result indicating a pass; and
allow the mechanical gripper to place the battery cell into a defective battery cell groove in response to the defect detection result indicating a fail.
